# EUROPEAN PATENT APPLICATION

(11) **EP 4 718 690 A1**
(43) Date of publication of application: **01.04.2026**
(21) Application number: 24178327.3
(22) Date of filing: 27.05.2024
(51) Int. Cl.: H02K 9/22, H02K 1/14, H02K 1/18

(54) **STATOR BODY AND SUPPORT STRUCTURE BEARING THE STATOR BODY**

(71) Applicant: Lilium GmbH, 82234 Wessling (DE)
(72) Inventor: VERMEIREN, Sebastien, 82234 Wessling (DE)
(74) Representative: Ter Meer Steinmeister & Partner

(57) **Abstract**

The present invention relates to a stator body (10) for a rotating electric machine, comprising: a ring-shaped outer stator yoke (11); a plurality of stator teeth (13) and a plurality of coil pockets (14). According to the invention, a plurality of receptive cavities (12) is recessed into the stator yoke (11) for receiving a plurality of heat sink means (20) for heat dissipation on an outside of the stator body (10); wherein the heat sink means (20) comprise at least one heat flux material having a higher thermal conductivity than a magnetic flux material of at least the stator yoke (11) of the stator body (10).

## Description

The present application relates to a thermally enhanced stator body for a rotating electric machine, a rotating electric machine comprising the stator body, and a support structure bearing said stator body.

### Technical field of the invention

The thermally enhanced stator body for a rotating electric machine and the matching support structure according to the invention are suitable for a variety of applications focused on power density in electromotive performance, primarily in transportation or mobile purposes such as propelling, power generation or recuperation in ground-based, ship-borne and airborne vehicles.

### Background of the invention

For providing optimized material properties of magnetic flux which is running through the stator of a rotating electric machine and being in strong interaction with a resulting electromotive force of the machine, it has become standard for long time to build stators out of magnetic iron, foremost silicon enriched electrical steel. More particular, the design of stator cores is often formed by axially oriented stacks of grain oriented flat-rolled steel sheets.

This common design still offers today outstanding magnetic properties for magnetic flux at stator teeth, i.e. stator poles generated by the electromagnetic stator coils, as well as cost and production efficiency.

However, dedicated electrical steel naturally has good but not the best material properties in terms of thermal conductivity. The thermal conductivity of materials in a rotating electrical machine, particularly in a radially outer area of the machine, is becoming increasingly important with the increased power density of modern electric motors and generators. The waste heat from reactive power loss, which is generated inside a machine, must be dissipated to the outside to avoid overheating damage to components such as the coils, insulation, seals, bearings and the like, even over long operating periods. Cooling techniques involving channels for air or liquid media are confronted with design boundaries set for machines of high power density, where heat is generated in an increasingly confined installation space.

### Summary of the Invention

It is an object of the invention to overcome at least partially the described problems in the state of art. More particular, it is an object of the invention to create a technique for a rotating electric machine or at least a design of a component thereof, which enables improved heat dissipation from the stator poles.

These objects are solved by a stator body having the features of claim 1. Further features and details of the invention result from the dependent claims, the specification, and the drawings. Features and details described in connection with the claimed stator body according to the invention naturally also apply in connection with the claimed rotating electric machine and the claimed matching support structures according to the invention, and vice versa, so that the individual aspects of the invention are or can always be mutually referred to in the disclosure.

The invention proposes a stator body for a rotating electric machine, comprising: a ring-shaped outer stator yoke; a plurality of stator teeth extending radially inwards from the stator yoke; and a plurality of coil pockets formed on an inside of the stator yoke between each of the stator teeth. A plurality of receptive cavities is recessed into the stator yoke for receiving a plurality of heat sink means for heat dissipation on an outside of the stator body. The heat sink means are congruently shaped with respect to a contour of the receptive cavities, wherein the heat sink means inserted into the receptive cavities are in surface contact with the stator yoke. The heat sink means comprise at least one heat flux material having a higher thermal conductivity than a magnetic flux material of at least the stator yoke of the stator body.

Hence, for the first time, the invention provides to replace a magnetic flux material which is a material of high magnetic permeability like dedicated electrical steel, by a heat flux material to be inserted in outer regions of the stator, which is another material of lower magnetic permeability but superior in thermal conductivity over the magnetic flux material of the stator body.

As a first and primary advantage of the invention, said replacement of materials results in an improvement of heat dissipation across the stator in radial direction to the outside of the rotating electric machine.

As a second advantage, such improvement of heat dissipation is solely achieved by physical properties of materials, i.e. without any further requirements or measures of cooling technology nor any additional means or moving elements that would result in a more complicated basic design of the rotating electric machine.

Furthermore, since the replacement of materials takes place in regions on the outside of the stator body the structural improvement of heat dissipation is allocated on the largest thermal interface of the stator towards an embedding system so as to provide the best spatial choice of thermal improvements for heat dissipation.

As a third advantage, due to the allocation of the replacement of materials on the outside of the stator body, the preparation and assembling like forming the receptive cavities and insertion of heat sink means, can be performed simply from the outside which is easy to reach. The formation of the receptive cavities can be achieved within a step of punching out the shape of steel sheets, or by milling a stacked or massive stator body. Hence, even though a stator body is usually not a cast moulded form body, such step can be effectively integrated into a production process without major significant hurdles and efforts.

According to an advantageous further feature of the invention, the receptive cavities have an axial extension through at least a part of an axial dimension of the stator yoke, and a radial cross-section of each receptive cavity encloses a point of interference between an outer circumference of the stator yoke and an axis of radial extension of one of the stator teeth.

This feature constitutes a spatially tailored improvement of heat dissipation in particular regions in an outer area of the stator. Investigations of the inventors revealed that at said points of interference between the outer circumference and the radial axes of stator teeth represent regions of lowest magnetic flux density of the magnetic flux running between each and through each of the stator poles. On the other hand, said regions, where magnetic flux density comes to a minimum, are at the same time regions optimally allocated to take up and radiate outwards, a maximum of heat flux from the stator body to a system environment, since the heat source, i.e. the stator pole by means of the stator coils wound around the stator teeth, directly point in radial direction towards said specified regions in the direction of heat dissipation.

Due to the explained geometrically enhanced effects in said particular design having, in regions around of interference between the outer circumference and the radial axes of stator teeth, the receptive cavities for accepting materials of superior thermal conductivity, as represented by the heat sink means, said particular design constitutes the best mode in achieving a maximum of heat dissipation improvement at a minimum of magnetic flux impairment, i.e. at a lowest influence on electromotive performance.

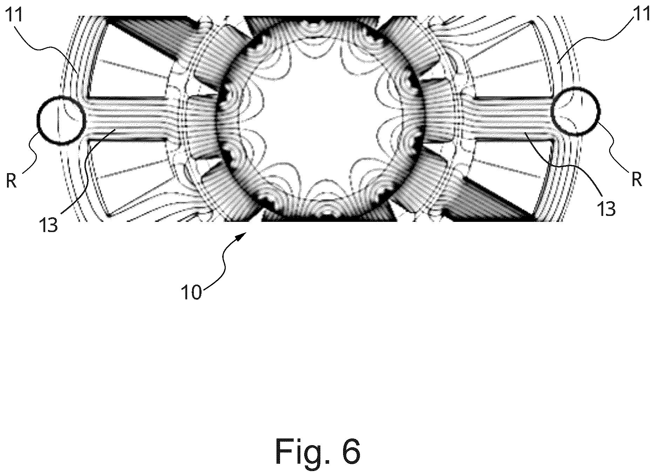

According to an advantageous further feature of the invention, the radial cross-section of the receptive cavities has a parabolic or triangular shaped contour. This feature constitutes a further enhancement of the afore mentioned particular design. Since, as derivable from Fig. 6, imaginary bundles of magnetic flux lines are running between and through each of the stator teeth, the parabolic or triangular shaped contour of cavities and consequently an inserted material of lower magnetic permeability, is confined in a streamlined space of the lowest magnetic flux density, hence leading to a design resulting in further less impairment of magnetic flux through the stator body.

According to an advantageous further feature of the invention, the at least one heat flux material that forms at least a part of the heat sink means includes at least one of aluminium-based metals, alloys or composites, copper-based metals, alloys or composites, and ceramic materials or composites. These materials provide best thermal conductivity which is superior to the property of common electrical steel.

According to an advantageous further feature of the invention, any of the heat sink means comprises a thermal conductive paste forming a filled-out surface contact with the stator yoke, wherein the corresponding heat sink means is completely or in part formed of a cured paste body of the thermal conductive paste. This feature enables a substantial facilitation in manufacturing, since a paste-like substance is easy to assemble, and a firm fitting for a tight and compressed thermal surface contact is much easier realized compared to a fitting of rigid parts involving issues or needs of post-processing for tight tolerances. Preferred constituents of such thermal paste include a binder and particles of good thermally conductive metals like e.g. aluminium or copper, ceramics, or oxides and compositions thereof.

According to an advantageous further feature of the invention, any of the heat sink means comprises a monolithic core element, optionally additionally combined with the cured paste body of the thermal conductive paste, wherein the core element preferably extends along the full axial dimension of the receptive cavity. In a composition of the heat sink means, a component of a rigid body of said core element basically has a higher density and thus thermal conductivity than a component built of the cured thermal paste. Furthermore, extrusion profiles of e.g. prismatic or cylindrical cross-section for the purpose of manufacturing the monolithic core element, are easily available, thus further facilitating the manufacturing process. Preferred materials for said core element include good thermally conductive metals like e.g. aluminium or copper.

According to an advantageous further feature of the invention, the cross-section of the core element of the heat sink means radially extends beyond the outer circumference of the stator body. This feature enables a basic functionality of engagement between the stator or the rotating electric machine and an external counterpart of a motor housing or a carrying system. Compared to the component of a cured thermal paste, the rigid body of the core element has a higher mechanical strength against e.g. shearing forces, enabling a more specified functionality of e.g. a torque locking engagement together with a corresponding groove an external counterpart.

According to an advantageous further feature of the invention, any of the heat sink means comprises to the outside of the stator body, an inner engagement groove recessed into the heat sink means, preferably extending along the full axial dimension of the heat sink means. This feature enables the afore mentioned functionality of torque locking engagement in a complementary design, together with an inwardly directed corresponding protrusion of an external counterpart.

According to an advantageous further feature of the invention, any of the heat sink means further comprises an optional torque lock element additionally to the core element, wherein the torque lock element has a congruently shaped cross-section with respect to a contour of the inner engagement groove in the core element, wherein, in an engaged state of the torque lock element with the inner engagement groove, the torque lock element radially extends beyond the outer circumference of the stator yoke. This feature represents an alternative in the afore mentioned complementary design for the functionality of torque locking engagement, wherein a corresponding inwardly directed protrusion does not necessarily need to be provided and integrally formed in a shape and material by an external counterpart.

According to an advantageous further feature of the invention, the torque lock element comprises a hardened heat flux material having a higher shear strength than a heat flux material of the core element. This feature provides, with respect to the afore mentioned alternative complementary design involving the torque lock element, a higher mechanical strength of torque lock between the stator body and an external counterpart like a motor housing or a carrying system. A preferred material for this purpose can be a forged or otherwise hardened light metal like forged aluminium.

According to an application embodiment of the invention, a rotating electric machine comprises an inner rotor coupled to a shaft and an outer stator having a stator body including the essential and at least one of the mentioned advantageous features.

According to an advantageous embodiment of the invention, a support structure bearing the stator body is engaged with the stator body, wherein the stator body has the mentioned feature where the cross-section of the core element of the heat sink means radially extends beyond the outer circumference of the stator body. In turn, the support structure has an inner circumference opposing and substantially enclosing the outer circumference of the stator body and comprises at least one outer engagement groove recessed in the inner circumference of the support structure, wherein the outer engagement groove is congruently shaped with respect to a contour of any of the core elements of any of the heat sink means extending beyond the outer circumference of the stator yoke. This embodiment represents one design of a system environment for a torque locking engagement between the stator yoke and an external counterpart by means of the support structure.

According to an advantageous embodiment of the invention, a support structure bearing the stator body is engaged with the stator body, wherein the stator body has the mentioned feature where any of the heat sink means further comprises an optional torque lock element additionally to the core element, wherein the torque lock element has a congruently shaped cross-section with respect to a contour of the inner engagement groove in the core element, wherein, in an engaged state of the torque lock element with the inner engagement groove, the torque lock element radially extends beyond the outer circumference of the stator yoke. In turn, the support structure has an inner circumference opposing and substantially enclosing the outer circumference of the stator body, wherein the support structure comprises least one outer engagement groove recessed in the inner circumference of the support structure, and wherein the outer engagement groove is congruently shaped with respect to the cross-section of the torque lock element of any of the heat sink means extending beyond the outer circumference of the stator yoke. This embodiment represents an alternative design of a system environment for a torque locking engagement between the stator yoke and an external counterpart by means of the support structure.

According to an advantageous embodiment of the invention, a support structure bearing the stator body is engaged with the stator body, wherein the stator body has the mentioned feature where any of the heat sink means comprises to the outside of the stator body an inner engagement groove recessed into the heat sink means, preferably extending along the full axial dimension of the heat sink means. In turn, the support structure has an inner circumference opposing and substantially enclosing the outer circumference of the stator body, the support structure comprises least one outer engagement groove recessed in the inner circumference of the support structure, wherein the outer engagement groove is congruently shaped with respect to the cross-section of the torque lock element of any of the heat sink means extending beyond the outer circumference of the stator yoke. This embodiment represents another alternative design of a system environment for a torque locking engagement between the stator yoke and an external counterpart by means of the support structure.

According to an advantageous embodiment of the invention, the support structure forms one of: a machine casing for housing a rotating electric machine, a motor carrier for mounting an electric motor in a propulsion system of vehicle, or an engine mount for integrating at least one electric engine, preferably an electric impeller, into a wing structure of an electrically propelled aircraft or drone. These embodiments represent structural embedding systems for preferred applications that benefit from the explained advantages of the invention and its further optional features.

Further objects, advantages, features and applications of the present invention will become apparent from the following description of the exemplary embodiments with reference to the drawing. In the drawing:
- Fig. 1: shows a cross-section view on the two alternative designs of the receptive grooves and heat sink means to be integrated into the stator body according to embodiments of the invention;
- Fig. 2: shows a heat sink means of two components according to an embodiment of the invention;
- Fig. 3: shows a combination of a heat sink means and an externally bearing support structure having a torque locking shape feature according to an embodiment of the invention;
- Fig. 4: shows a combination of a heat sink means and an externally bearing support structure having an alternative torque locking shape feature according to an embodiment of the invention;
- Fig. 5: shows a combination of a heat sink means and an externally bearing support structure including an additional torque lock element having an alternative torque locking shape feature according to an embodiment of the invention; and
- Fig. 6: explanatorily illustrates the distribution of magnetic flux density in a stator body by means of imaginary bundles of magnetic flux lines splitting and running through the stator teeth, as well as preferred regions for locating the heat sink means characterized by lowest magnetic flux density.

### Detailed description of the Invention

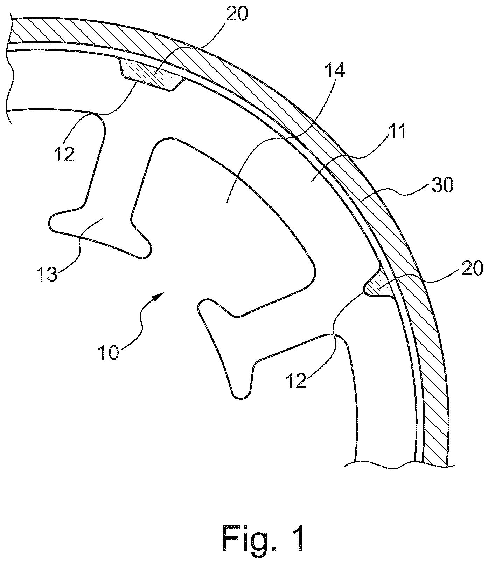

Fig. 1 is a schematic illustration of a section of the stator body 10 of a rotating electric machine in view of a radial cross-section. For orientation purposes, a fully assembled rotating electric machine would comprise a non-depicted rotor mounted on a rotating axis positioned in the center of the section of the stator body 10. The stator body 10 basically includes a cylindrical stator yoke 11, which encloses a plurality of stator poles. Each stator pole is an electromagnet including a non-depicted stator coil which is wound around an iron core. Such iron cores are provided by a plurality of stator teeth 13 integrally formed with the connecting stator yoke 11 in the stator body 10. Between the stator teeth 13, the stator body 10 has coil pockets 14 providing free spaces for accommodating the windings of the stator coils centred around each stator tooth 13.

On an outer circumference of the stator body 10, axially extending receptive grooves 12 are machined or originally formed into the stator yoke 11. The receptive grooves 12 run through the full axial dimension of the stator body 10. The stator body 10 is carried by a bearing supporting structure 30 which in more detail can be represented by a house or casing of the machine, a motor carrier, an engine mount, or similar external counterpart of the machine or an embedding system of machine application.

The receptive grooves 12 serve for accepting an insertion of heat sink means 20. The heat sink means 20 comprise another material than the material of the stator body 10. More particular, the stator body is usually made of a ferritic metal such as dedicated electrical steel having superior magnetic permeability. The heat sink means 20 on the other side comprises one or more materials of presumably less magnetic permeability but having a superior thermal conductivity over the material of the stator body 10. Such materials include pure or composite materials of aluminium-based or copper-based metals, metal alloys and metal oxides thereof, as well as ceramic materials.

In one mode of the depicted embodiment, the heat sink means 20 are formed of a thermally conductive paste, also called thermal paste, or a liquid viscous sinter mixture having particles of the above-mentioned metals or ceramics dissolved in a binder agent and optional functional additives. Such material is filled into the receptive grooves 12 to form the heat sink means 20 made from a cured paste or sintered mixture.

In another mode of the depicted embodiment, the heat sink means 20 are made from solid, i.e. monolithic bodies of the above-mentioned metals or ceramics which are casted, extruded, machined, or otherwise formed into a firm fitting of thermal surface contact together with the shape the receptive grooves 12.

The electro-magnetic action of the stator poles represented by the inner ends of the stator teeth 13 produce magnetic flux in the stator body 10, as depicted in Fig. 6. Imaginarily following the magnetic flux from the inner ends of the stator teeth 13, bundles of magnetic flux lines run straight outwards through each of the stator teeth 13 towards the stator yoke 11. In regions R at the outer ends of the stator teeth 13, said imaginary bundles split into a left curved bundle and a right curved bundle via a point below, i.e. inwards of the receptive grooves 12 for running, on both sides, through the stator yoke 11 to the next neighbouring stator teeth 13 and then likewise, symmetrically running back inwards through said next neighbouring stator teeth 13.

In one exemplary mode of the embodiment shown in a left-hand upper area, the receptive groove 12 has a trapezoidal shape with a larger extension in the circumferential direction, and in another mode of the embodiment shown in a right-hand lower area, the receptive groove 12 has a parabolic shape with a smaller extension in the circumferential direction.

Both modes have in common inclined edges. On one hand, the inclined edges of each receptive groove 12 are beneficial for a firm fitting of an inserted material of the heat sink means 20. On the other hand, the inclined edges of each receptive groove 12 correspond to a streamlined designed with respect to a magnetic flux density, wherein a triangular shaped region R of lowest magnetic flux density is located outwards of the above-mentioned splitting point of each imaginary bundle of magnetic flux turning in a curved left way or curved right way into the stator yoke 11, as illustrated by encircled regions R in Fig. 6.

The larger extension of the trapezoidal shape in the circumferential direction provides a larger thermal interface for heat dissipation between the stator body and an outer surrounding or external system environment.

The smaller extension of the parabolic shape in the circumferential direction has less interference with more dense areas of the magnetic flux lines turning from the stator teeth 13 into the stator yoke on a curved path, hence providing less impairment of magnetic flux by the material of heat sink means 20 which has poorer magnetic permeability than the stator body 10 itself.

A magnified gap is illustrated between the outer circumference of the stator body 10 and the inner circumference of the support structure 30. This gap is naturally caused by tolerances between assembled components. In real circumstances, the gap is much smaller relatively to all other dimensions. Furthermore, this gap can be preferably completely filled with said thermal paste to provide full thermal contact between the entire outside of the stator body 10 and the inside of the support structure 30.

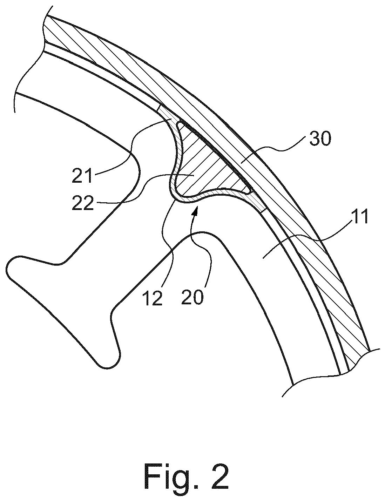

Fig. 2 illustrates another embodiment of the heat sink means 20 inserted in a parabolic shaped receptive groove 12. The heat sink means 20 comprises two components including, as a first component, a cured paste body 21 made from the afore mentioned thermal paste or sinter mixture, and as a second component, a core element 22 made from a monolithic body of the afore mentioned materials of metals, alloys, oxides, or ceramics. Due to a higher density of the core element 22 compared to the cured paste body 21, this embodiment provides an improved thermal conductivity in purpose of heat dissipation.

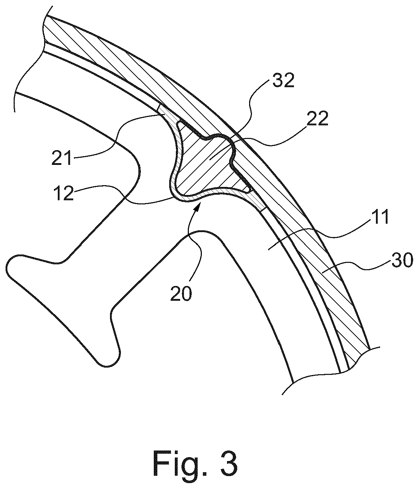

Fig. 3 illustrates an embodiment of a system including the stator body 10, the heat sink means 20 and the supporting structure 30 for combining the functionality of an improved heat dissipation together with the functionality of a mechanical engagement, e.g. a torque locking engagement between the stator body and the support structure 30.

In view of the radially inner side, the heat sink means 20 inserted in the parabolic shaped receptive groove 12 is similar to the embodiment of Fig. 2. In view of the radially outer side, the heat sink means 20, more particular, the core element 22 of the heat sink means 20 also provides an outward protrusion, at least in the particularly depicted mode, a rounded shaped protrusion, which is accepted within a likewise rounded fitting contour of an outer engagement groove 32 which is recessed in the opposing inside of the support structure 30.

In this embodiment, the heat sink means 20 optionally also comprises the cured paste body 21 which surrounds at least partially the core element 22 so as to facilitate a firm fitting of opposing surfaces with respect to tolerances and thermal contact. Again in this embodiment, thermal paste might fill up all of the magnified illustrated gap between the stator body 10 and the support structure 30.

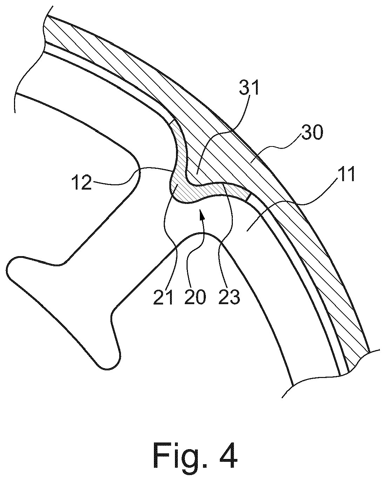

Fig. 4 illustrates an alternative embodiment of a system including the stator body 10, the heat sink means 20 and the supporting structure 30 having the functionalities of improved heat dissipation and torque locking engagement.

The support structure 30 comprises an engagement protrusion 31 extending radially inwards from the inner circumference. The inward engagement protrusion 31 is accepted in a congruently shaped contour of an inner engagement groove 23 recessed in the heat sink means 20, more particular the cured paste body 21 of the heat sink means 20.

At least in the particularly depicted mode, the heat sink means 20 providing the inner engagement groove 23 is built by the component of the cured paste body 21 only, however, in an alternative non-depicted mode, the heat sink means 20 might also or solely comprise the component of the core element 22. Again in this embodiment, thermal paste might fill up all of the magnified illustrated gap between the stator body 10 and the support structure 30.

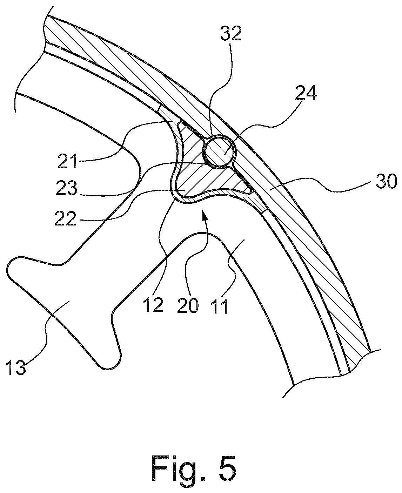

Fig. 5 illustrates another alternative embodiment of a system including the stator body 10, the heat sink means 20 and the supporting structure 30 having the functionalities of improved heat dissipation and torque locking engagement.

In view of the radially inner side, the heat sink means 20 inserted in the parabolic shaped receptive groove 12 is similar to the embodiment of Fig. 2 and Fig. 3. In view of the radially outer side, the outer engagement groove 32 recessed in the support structure 30 is similar to the embodiment of Fig. 3. The heat sink means 20 additionally comprises, as a third component, a torque lock element 24 extending in the axial direction. To the inner side, the torque lock element 24 is accepted in a congruently shaped contour of an inner engagement groove 23 recessed in the heat sink means 20, more particular the core element 22 of the heat sink means 20. To the outer side, the torque lock element 24 is accepted in the contour of the outer engagement groove 32 in the opposing inside of the support structure 30. At least in the particularly depicted mode, the torque lock element 24 has a circular cross-section. However, the torque lock element 24 may have a prismatic or any other kind of cross-section matching to contours of the engagement grooves 23, 32.

At least in the particularly depicted mode, the heat sink means 20 is built by the component of the cured paste body 21, the core element 22 and the torque lock element 24. However, in an alternative non-depicted mode, the heat sink means 20 might comprise only one component of the cured paste body 21 and the core element 22 providing the inner engagement groove 23 for the torque lock element 24. Again in this embodiment, thermal paste might fill up all of the magnified illustrated gap between the stator body 10 and the support structure 30.

Fig. 6 shows the electro-magnetic action of stator poles by illustration of imaginary bundles of magnetic flux lines running through the stator body 10 during operation and regions R of lowest magnetic flux density to be chosen for the ideal positioning of the receptive grooves 12 and the insertion of heat sink means 20 for a minimum possible impairment of performance.

The foregoing explanations of the embodiments describe the present invention solely by way of examples. Of course, individual features of the embodiments can be freely combined with one another, provided this is technically expedient, without departing from the scope of the present invention.

### List of reference characters

- 10: stator body
- 11: stator yoke
- 12: receptive cavities
- 13: stator teeth
- 14: coil pockets
- 20: heat sink means
- 21: cured paste body
- 22: core element
- 23: inner engagement groove
- 24: torque lock element
- 30: support structure
- 31: engagement protrusion
- 32: outer engagement groove

- R: regions of lowest magnetic flux density

## Claims

1. Stator body (10) for a rotating electric machine, comprising:
a ring-shaped outer stator yoke (11);
a plurality of stator teeth (13) extending radially inwards from the stator yoke (11); and
a plurality of coil pockets (14) formed on an inside of the stator yoke (11) between each of the stator teeth (13);
**characterized in that**,
a plurality of receptive cavities (12) is recessed into the stator yoke (11) for receiving a plurality of heat sink means (20) for heat dissipation on an outside of the stator body (10); wherein
the heat sink means (20) are congruently shaped with respect to a contour of the receptive cavities (12), wherein the heat sink means (20) inserted into the receptive cavities (12) are in surface contact with the stator yoke (11); and
wherein
the heat sink means (20) comprise at least one heat flux material having a higher thermal conductivity than a magnetic flux material of at least the stator yoke (11) of the stator body (10).

2. Stator body (10) for a rotating electric machine according to claim 1, wherein the receptive cavities (12) have an axial extension through at least a part of an axial dimension of the stator yoke (11), and a radial cross-section of each receptive cavity (12) encloses a point of interference between an outer circumference of the stator yoke (11) and an axis of radial extension of one of the stator teeth (13).

3. Stator body (10) for a rotating electric machine according to claim 1 or 2, wherein the radial cross-section of the receptive cavities (12) has a parabolic or triangular shaped contour.

4. Stator body (10) for a rotating electric machine according to any of claims 1 to 3, wherein the at least one heat flux material that forms at least a part of the heat sink means (20) includes at least one of aluminium-based metals, alloys or composites, copper-based metals, alloys or composites, and ceramic materials or composites.

5. Stator body (10) for a rotating electric machine according to any of claims 1 to 4, wherein any of the heat sink means (20) comprises a thermal conductive paste forming a filled-out surface contact with the stator yoke (11), wherein the corresponding heat sink means (20) is completely or in part formed of a cured paste body (21) of the thermal conductive paste.

6. Stator body (10) for a rotating electric machine according to any of claims 1 to 5, wherein any of the heat sink means (20) comprises a monolithic core element (22), optionally additionally combined with the cured paste body (21) of the thermal conductive paste, wherein the core element (22) preferably extends along the full axial dimension of the receptive cavity (12).

7. Stator body (10) for a rotating electric machine according to claim 6, wherein the cross-section of the core element (22) of the heat sink means (20) radially extends beyond the outer circumference of the stator body (10).

8. Stator body (10) for a rotating electric machine according to any of claims 1 to 6, wherein any of the heat sink means (20) comprises to the outside of the stator body (10) an inner engagement groove (23) recessed into the heat sink means (20), preferably extending along the full axial dimension of the heat sink means (20).

9. Stator body (10) for a rotating electric machine according to claim 8, wherein any of the heat sink means (20) comprises an optional torque lock element (24), wherein the torque lock element (24) has a congruently shaped cross-section with respect to a contour of the inner engagement groove (23) in the heat sink means (20), wherein, in an engaged state of the torque lock element (24) with the inner engagement groove (23), the torque lock element (24) radially extends beyond the outer circumference of the stator yoke (11).

10. Stator body (10) for a rotating electric machine according to claim 9, wherein the torque lock element (24) comprises a hardened heat flux material having a higher shear strength than a heat flux material of the core element.

11. Rotating electric machine comprising an inner rotor coupled to a shaft and an outer stator having the stator body (10) according to any of claims 1 to 10.

12. Support structure (30) bearing the stator body (10) according to claim 7, wherein the support structure (30) has an inner circumference opposing and substantially enclosing the outer circumference of the stator body (10), the support structure (30) comprises at least one outer engagement groove (32) recessed in the inner circumference of the support structure (30), wherein the outer engagement groove (32) is congruently shaped with respect to a contour of any of the core elements (22) of any of the heat sink means (20) extending beyond the outer circumference of the stator yoke (11).

13. Support structure (30) bearing the stator body (10) according to claim 9, wherein the support structure (30) has an inner circumference opposing and substantially enclosing the outer circumference of the stator body (10), the support structure (30) comprises least one outer engagement groove (32) recessed in the inner circumference of the support structure (30), wherein the outer engagement groove (32) is congruently shaped with respect to the cross-section of the torque lock element (24) of any of the heat sink means (20) extending beyond the outer circumference of the stator yoke (11).

14. Support structure (30) bearing the stator body (10) according to claim 8, wherein the support structure (30) has an inner circumference opposing and substantially enclosing the outer circumference of the stator body (10), the support structure (30) comprises least one engagement protrusion (31) extending radially inwards from the inner circumference of the support structure (30), wherein the engagement protrusion (31) is congruently shaped with respect to a contour of the inner engagement groove (23) of any of the heat sink means (20).

15. Support structure (30) according to any of claims 12 to 14, wherein the support structure (30) forms one of:
a machine housing of a rotating electric machine,
a motor carrier for mounting an electric motor in a propulsion system of vehicle, or
an engine mount for integrating at least one electric engine, preferably an electric impeller, into a wing structure of an electrically propelled aircraft or drone.
